# EUROPEAN PATENT APPLICATION

(11) **EP 1 721 718 A1**
(43) Date of publication of application: **15.11.2006**
(21) Application number: 05103799.2
(22) Date of filing: 09.05.2005
(51) Int. Cl.: B29C 33/60, B28B 7/38

(54) **Mould release composition for hydraulic binders**

(71) Applicant: SIKA, S.A., Madrid, 28108 (ES)
(72) Inventor: Prenafeta Pastor, Modest, 28108, Madrid (ES); Granizo Fernandez, Luz, 28108, Madrid (ES); Manzanedo Garcia, Beatriz, 28108, Madrid (ES)
(74) Representative: Elzaburu Marquez, Alberto

(57) **Abstract**

Mould release composition for hydraulic binders that comprises an oily component of any kind acting as the base, and a paraffinic, olefinic or aromatic organic alcoholic compound with one or more hydroxyl groups in the primary and/or secondary position or isoalcohols, which are soluble both in water and in the oily component, are liquid at ambient temperatures and have a C₁-C₂₀ chain, and it is used in the composition as an antifoaming additive in an amount of 0.5-25 wt-%, optionally together with an emulsifying agent and water.

## Description

### Field of the invention

The present invention relates to a mould release composition for hydraulic binders, especially for moulds and formwork used with concrete, and more specifically to a composition containing a separating agent in combination with an antifoaming additive and an emulsifying additive.

### Background of the invention

Mould release compositions for moulds and formwork (shuttering) used with concrete are applied to the mould or formwork before the freshly-made concrete is introduced and they serve the purpose of reducing the adhesion between the concrete and the mould so as to prevent any deterioration of their surfaces.

The substances used as the base of these compositions can be of mineral, animal, vegetable or synthetic origin, and can be for example waxes, oils and fats or derivatives of these, together with mixtures of two or more of these substances. The compositions in question can also contain additives aimed at preventing oxidation and corrosion of the formwork, as well as biocides, humectants, antiporosity agents, emulsifiers and surfactants.

The mould release agents of the prior art either contain no antifoaming component or they contain antifoaming agents that are based on ethylene oxide - propylene oxide copolymers, on fatty acid esters, or on other polymers.

Spanish Patent ES 2,113,183 describes the effect of water-insoluble monohydric alcohols (the majority of which are long-chain mono and dioleates, esterified with various fatty acids), which have a certain antifoaming action, although the aim of the invention is basically to form a fatty film on the aqueous emulsion to prevent the concrete from adhering to the formwork.

Spanish Patent ES 2,146,972 describes a superfluidizing compound for cement compositions that contains an antifoaming additive consisting of one or more ethylene oxide - propylene oxide copolymers that are esterified at the start of the chain with an alkoxy group R1-O (where R1 is a straight or branched alkyl group with 2-20 carbon atoms) and have terminal monomer units with a hydrogen atom bonded to the oxygen atom.

International Patent WO A 91/03536 describes antifoaming agents that are intended for detergents and consist of mixtures of polyethylene glycols and ethylene oxide - propylene oxide block copolymers that are alkoxylated with C₈-C₁₈ alkoxy residues and contain 2-6 units derived from ethylene oxide and 3-7 units derived from propylene oxide.

European Patent EP 0,561,465 proposes emulsifiable mould release agents for hydraulic binders, based on esters formed between fatty acids and polyols, which do not have any hydrogen atoms in position β with respect to the OH group. Higher monohydric aliphatic alcohols may also be added to these esters. The esters or their mixtures with alcohols are emulsified with the aid of an emulsifier.

It has now been found that antifoaming agents are essential for the formulation of the best composition used for the release of the formwork from the concrete, and that not all the antifoaming compounds of the prior art give good results as regards the finish of the concrete. The aim of the present invention is to remedy this drawback.

### Summary of the invention

The aim of the present invention is to provide a mould release composition that incorporates a suitable additive to minimize the amount of air on the surface of the concrete.

The antifoaming agent proposed in this invention is based on alcohols that are completely soluble both in water and in the oily constituent (which rarely occurs with ethers and esters), are cheap and non-toxic and have an antifoaming action that is immediate and does not affect the characteristics of the concrete.

The mould release composition for hydraulic binders according to the invention comprises an oily component of any kind as its base, a paraffinic, olefinic or aromatic organic alcoholic compound with one or more hydroxyl groups in the primary and/or secondary position or isoalcohols, which dissolve both in water and in the oily component, are liquid at ambient temperatures, have a C₁-C₂₀ chain, and are incorporated in an amount of 0.5-25 wt-% as the antifoaming additive, together with an emulsifying additive and water.

The hydroxyl group of volatile alcohols reduces the surface tension and ensures the rupture of air bubbles, whose space can then be occupied by concrete. The incorporation of a small amount of alcohols therefore makes the surface of the concrete more homogeneous.

The incorporation of this agent in the mould release composition frees the concrete from foam in the area where it is in contact with the mould. This prevents the formation of defects that are caused by the presence of air occluded in the surface layer of the concrete, as well as preventing the phenomenon of "sanding-up" and adhesion problems. In addition to forming a fatty layer that prevents the adhesion of the concrete to the walls of the mould, the composition has an antifoaming action that prevents pitting and the formation of imperfections on the surface of the concrete, thus improving its finish.

Other characteristics and advantages of the present invention will emerge from the following detailed description.

### Detailed description of the invention

Mould release compositions are used to prevent adhesion between two surfaces. A mould release composition forms a film that acts as a lubricant between the surfaces in question.

The requirements placed on mould release compositions for hydraulic binders vary with the external conditions, such as for example the air temperature and the material used to make the mould. In addition, numerous countries impose special requirements as regards the effects of these compositions on health and the environment.

For the purposes of the present invention, a "hydraulic binder" is a mineral substance that hardens into a stone-like material on absorbing water and which is water-resistant when it has set. The preferred hydraulic binder is concrete.

Concrete is obviously a basic substance, and a layer of soap can therefore form if wet concrete comes into contact with organic acids. This is precisely the layer that acts as a lubricant and stops the concrete from sticking to the mould. This is why mould release compositions usually contain fatty acids. To ensure the required effect is obtained, it is important that the amount of fatty acids and the acid value remain within well-defined limits. This can be done by dissolving the fatty acids in an oil.

The mould release composition must prevent the concrete from adhering to the mould, but it must itself firmly adhere to the walls of the mould so that it is not lost before the concrete is introduced in the mould. This is particularly important when the mould is made of metal, when it may be difficult to keep the mould release composition in place, especially since the mould is often subjected to strong vibrations. In addition, when the concrete is being introduced into the mould, a mechanical strain is also exerted on the mould release agent.

The mould release composition is usually applied by spraying it on the walls of the mould, for which reason it should have a low viscosity, and - if it is to be used in a cold climate - it must also remain free-flowing at the prevailing temperature.

To sum up, the mould release composition must have the following characteristics:
- a good solubility of the various substances in it, such as for example fatty acids, humectants and other additives
- favourable properties at low temperatures
- low viscosity
- good environmental characteristics, and
- a high stability.

The mould release compositions are therefore based on an oil to which various substances are added to confer the required properties on it.

The required acid value is obtained by the addition of fatty acids. The right adhesion is achieved by adding humectants or wetting agents, which reduce the surface tension of the oil.

A number of different additives can be incorporated, such as agents to counteract oxidation and the corrosion of the formwork, biocides, humectants, emulsifiers, surfactants and substances that prevent the formation of a porous structure in the concrete.

The mould release composition according to the invention comprises the following constituents:
- an oily component that can be of mineral, animal, vegetable or synthetic origin
- an antifoaming agent composed of a paraffinic, olefinic or aromatic organic alcoholic component with one or more hydroxyl groups in the primary and/or secondary position or isoalcohols, which are soluble both in water and in the oily component, are liquid at ambient temperatures, and have a C₁-C₂₀ chain, which is used in a quantity ranging from 0.5 to 25 wt-% and preferably from 5 to 10 wt-%
- emulsifiers incorporated in an amount of 0 to 25 wt-% and preferably 2 to 7 wt-%
- other additives that are generally used in mould release compositions for hydraulic binders, and
- water.

The oily component can be chosen from a group comprising natural mineral oils (either pure or recycled), synthetic mineral oils (polybutylenes), natural vegetable oils (such as for example sunflower oil and soya bean oil), modified (i.e. esterified or epoxidized) vegetable oils, and paraffins and waxes, whether in liquid or solid form. This component may also contain other oils that are suitable for mould release compositions, such as 2-ethylhexyl stearate, fatty ethers derived from straight-chain fatty alcohols, such as di-n-octyl ether, and triglycerides. Either a pure oily component can be used as a mould release composition for hydraulic binders or one that contains the well-known additives employed for this purpose, such as anticorrosion agents, antioxidants, antiporosity agents, humectants (wetting agents) and preservatives. If the mould release composition is to be applied in the form of an emulsion, then emulsifiers can also be incorporated.

The antifoaming agent used can be chosen from a group comprising the following compounds: methyl, ethyl, propyl, isopropyl, butyl, isobutyl, pentyl, octyl and 2-ethylhexyl alcohol, and glycols such as ethylene glycol and propylene glycol, etc. The preferred antifoaming agents are isobutanol and 2-ethylhexanol.

The antifoaming action of these alcohols is due to their low surface tension and their polar nature, as well as to the fact that they are completely soluble both in water and oils, which is not the case in the prior art.

Defects in the surface of hydraulic binders are mainly due to a difference in surface tension between the mould release agent and the non-absorbent solid support. The mould release agent generally has a higher surface tension than the support on which it is applied. In such a case, the liquid tends to withdraw from the support instead of extending over it, which would be needed in order to obtain a homogeneous surface free of defects. It is therefore necessary to modify the surface tension in order to eliminate this problem. All of the mould release agents present problems when applied on supports that have a lower surface tension than that of the supports.

The incorporation of suitable additives reduces the surface tension. When applied on a support, the mould release agent can extend or contract, depending on its surface tension. If the surface tension of the liquid is higher than that of the support, the mould release agent contracts and tends to form a surface of minimum contact with the support. If the surface tension of the liquid is lower than that of the support, the liquid extends over the latter. The wetting power of the liquid is therefore greater when its surface tension is lower than that of the support.

Polar liquids have a high surface tension, that of water being 70 dyne/cm at 20°C. Non-polar liquids have a much lower surface tension, that of benzene being 29 dyne/cm and that of ethanol 22.3 dyne/cm. Non-polar liquids therefore flow more easily than water. Mercury, with the highest surface tension of any liquid, namely 480 dyne/cm, does not flow at all but disintegrates into small droplets.

In the case of the alcohols used in the present invention, the addition of small amounts of these to water reduces the surface tension, due to the abolition of molecular interactions. Admixing water with these alcohols reduces the cohesive forces between the water molecules, so the bubbles burst. This is due to their low surface tension, solubility in water and solubility in the oil. Any mould release agent, with or without emulsified water, will create a barrier between the concrete and the walls of the mould. However, when the antifoaming agent is added, the surface tension of water is reduced and the air bubbles whose walls are formed by the water will be ruptured sooner.

The following emulsifiers can be used in the present invention:
- straight or branched primary or secondary fatty alcohols with a C₈-C₂₀ chain, such as for example octyl, lauryl, myristyl, palmityl and stearyl alcohol, condensed with 2-40 mole of ethylene oxide and/or propylene oxide
- saturated or unsaturated C₈-C₂₀ fatty acids, such as for example oleic, stearic, palmitic and myristic acid, condensed with 2-40 mole of ethylene oxide and/or propylene oxide
- alkyl sulphates, more specifically sulphated straight or branched primary or secondary C₈-C₂₀ fatty alcohols (e.g. octyl, lauryl, palmityl, myristyl and stearyl alcohol) in the form of their sodium, ammonium, potassium, calcium or magnesium salt
- alkyl aryl sulphonates, more specifically sulphonated derivatives of dodecyl benzene, in the form of their sodium, ammonium, potassium, calcium or magnesium salt
- fatty amines, namely alkyl compounds with an amine function and a C₈-C₂₀ chain, such as for example laurylamine, oleylamine and stearylamine, condensed with 2-40 mole of ethylene oxide and/or propylene oxide
- alkanolamides, i.e. compounds with a C₈-C₂₀ chain, esterified with amides, examples being coconut oil mono and diethanolamide, as well as stearic, oleic and lauric acid mono and diethanolamide, including those condensed with 2-40 mole of ethylene oxide
- cationic surfactants and more specifically quaternary ammonium derivatives with groups having 1-20 carbon atoms, e.g. trimethyl cetyl ammonium chloride or bromide and dimethyl benzyl lauryl ammonium chloride or bromide.

The mould release composition according to the present invention is obtained by thoroughly mixing the oily component with the additives, i.e. the emulsifiers, antiporosity agents and antifoaming agents acting on the surface. This mixture or concentrate can be used directly as such or after emulsifying it in water. Such an emulsion is formed by adding water to the concentrate with stirring, while ensuring that the product obtained contains enough active substance.

The mould release composition can be applied to the walls of the mould or formwork in various ways with a view to obtaining a ready separation between the latter and the hydraulic binder after this has set. Thus, it can be applied, either by itself or as an emulsion in water, by spraying, brushing-on or injection, or - if it is very viscous - with the aid of a spatula. Furthermore, the mould release compositions can be applied to the mould or formwork whether it is made of steel, wood or plastic.

The following examples serve to illustrate the mould release compositions whose ability to improve the final surface of concrete has been verified.

### Example 1

- 94% of mineral acid
- 6% of 2-ethylhexanol.

### Example 2

- 95% of epoxidized soya bean oil
- 5% of isopropanol.

### Example 3

- 94% of polybutylene
- 2% of isopropanol
- 4% of 2-ethylhexanol.

### Example 4

- 30% of mineral oil
- 2% of glyceryl trioleate condensed with 6 mole of ethylene oxide
- 2% of laurylamine condensed with 2 mole of ethylene oxide
- 1 % of sodium dodecyl benzene sulphonate
- 5% of 2-ethylhexanol
- 60% of water.

### Example 5

- 35% of sunflower oil
- 3% of 12/12 alcohol, condensed with 3 mole of ethylene oxide
- 2% of tallow fatty acid condensed with 40 mole of ethylene oxide
- 5% of isopropanol
- 55% of water.

### Example 6

- 37% of polybutylene
- 1 % of sodium dodecyl benzene sulphonate
- 5% of glyceryl trioleate condensed with 6 mole of ethylene oxide
- 7% of 2-ethylhexanol
- 50% of water.

### Example 7

- 40% of mineral oil
- 1 % of laurylamine condensed with 2 mole of ethylene oxide
- 3% of glyceryl trioleate condensed with 5 mole of ethylene oxide
- 2% of diethylene glycol
- 4% of isopropanol
- 50% of water.

Compositions containing mineral oils are appropriate when the formwork is made of a metal, compositions containing vegetable oils are appropriate when the formwork is made of wood, and compositions containing synthetic oils are appropriate when the formwork is made of plastic.

It has been found that the effect of the alcohol is greater and the final surface of the concrete is much smoother and more uniform in the case of compositions containing water and an emulsifier.

The preferred embodiment described above can be modified within the scope defined in the following claims.

## Claims

1. Mould release composition for hydraulic binders, comprising an oily component of any kind, that acts as the base, and an antifoaming agent, **characterized in that** the antifoaming agent is a paraffinic, olefinic or aromatic organic alcoholic compound with one or more hydroxyl groups in the primary and/or secondary position or isoalcohols, which are soluble both in water and in the oily component, are liquid at ambient temperatures, and have a C₁-C₂₀ chain, which is present in the composition in an amount of 0.5-25 wt-%.

2. Mould release composition for hydraulic binders according to Claim 1, **characterized in that** the said alcoholic compound is present in the composition in an amount of 5-10 wt-%.

3. Mould release composition for hydraulic binders according to Claim 1 or 2, **characterized in that** the alcoholic compound is isopropanol.

4. Mould release composition for hydraulic binders according to Claim 1 or 2, **characterized in that** the alcoholic compound is 2-ethylhexanol.

5. Mould release composition according to Claim 1, **characterized in that** it also contains an emulsifying agent and water.

6. Mould release composition according to Claim 5, **characterized in that** the emulsifying agent is present in the composition in an amount of 1-25 wt-%.

7. Mould release composition according to Claim 5, **characterized in that** the emulsifying agent is present in the composition in an amount of 2-7 wt-%.
